# EUROPÄISCHE PATENTSCHRIFT

(11) **EP 3 928 957 B1**
(45) Veröffentlichungstag und Bekanntmachung des Hinweises auf die Patenterteilung: **21.09.2022**
(21) Anmeldenummer: 21172925.6
(22) Anmeldetag: 10.05.2021
(51) Int. Cl.: B29C 55/28, B29C 55/02, B29C 35/04, F26B 21/00

(54) **BLASDÜSE**
BLOWING NOZZLE
BUSE DE SOUFFLAGE

(30) Priorität: 26.05.2020 DE 102020114029
(43) Veröffentlichungstag der Anmeldung: 29.12.2021
(73) Patentinhaber: Brückner Maschinenbau GmbH & Co. KG, 83313 Siegsdorf (DE)
(72) Erfinder: Höglauer, Christoph, 83329 Waging am See (DE); Waldleitner, Georg, 83093 Bad Endorf (DE)
(74) Vertreter: Flach Bauer & Partner Patentanwälte mbB

(56) Entgegenhaltungen:
- EP-B1- 0 907 476
- DD-A1- 253 666

## Beschreibung

Die Erfindung betrifft eine Blasdüse nach dem Oberbegriff des Anspruches 1.

Blasdüsen dienen beispielsweise zum Aufheizen oder Abkühlen von bahnförmigen Materialien, insbesondere bei der Kunststofffolien-Herstellung. Derartige Belüftungsdüsen sind dabei quer, d.h. in der Regel senkrecht zur Abzugsrichtung der Materialbahn und damit quer zur Bahnlaufrichtung ober- und/oder unterhalb einer Materialbahn angeordnet.

Um beispielweise eine Folie für einen Reckvorgang innerhalb einer Querreckanlage (TDO) auf die Produktionsspezifische Temperatur zu erwärmen oder abzukühlen, können bis zu 15 m lange Düsenkästen mit unterschiedlichen Ausströmöffnungen verwendet werden. Diese Düsenkästen werden üblicherweise einseitig mit einem verwendeten Temperaturträgermedium, z.B. Luft, per Pumpe oder Ventilator versorgt. Innerhalb des Düsenkastenvolumens verteilt sich z.B. die verwendete Luft über die Arbeitsbreite der Düse und strömt anschließend durch die in Öffnungen der der Materialbahn zugewandt liegenden Seite des Düsenkastens in Richtung dieser Materialbahn aus. Der austretende Mediumstrahl trifft auf die Materialbahn und gibt einen Teil seiner Energie in Form von Wärme an diese ab oder nimmt Temperatur von der Materialbahn im Falle einer Kühlung auf.

Eine der großen Herausforderungen ist dabei die möglichst gleichmäßige Verteilung des Trägermediums über die gesamte Arbeitsbreite des beispielsweise quer zu reckenden Kunststofffilms. Grund hierfür ist der direkte Zusammenhang zwischen Produktqualität und der gleichmäßigen Erwärmung oder Abkühlung über die Arbeitsbreite der Materialbahn. Dabei ist idealerweise die Temperatur sowie der Massenstrom je Ausströmöffnung über die Arbeitsbreite identisch.

Um eine derartige optimale Verteilung zu erreichen werden unterschiedliche Blasdüsen und damit Düsenkästen vorgeschlagen.

Häufig werden so genannte Ein- oder Zweikammerdüsenkästen verwendet. Der Unterschied ist hierbei, dass der innere Aufbau einer Zweikammerdüse das innere Volumen in zwei Bereiche unterteilt. Das bevorzugt von einer Stirnseite des Düsenkastens zugeführte gasförmige Fluid oder gasförmige Medium strömt in den Düsenkasten ein und wird über im Düsenkasten vorgesehene Zwischen- oder Durchtrittsöffnungen von einer ersten Kammer, in die das Medium einströmt, in eine nachfolgende zweite Kammer überführt. Von dieser zweiten Kammer aus kann das Medium dann über Düsenöffnungen (die unterschiedlich geformt sein können und dabei auch aus einem einzigen Längsschlitz bestehen können) in Richtung Material- oder Kunststofffilmbahn abgegeben werden.

Eine Einkammerdüse besitzt demgegenüber nur ein Volumen, d.h. eine einzige Ein- und Ausströmkammer, in welchen das verwendete gasförmige Fluid oder Medium von seiner Einströmöffnung über eine einzige oder über mehrere in Richtung Materialbahn ausgerichteten Auslassöffnungen abströmen kann.

Aus der DE 37 04 910 C1 oder der DE 36 26 171 C1 ist eine Düsenanordnung für eine in Längsrichtung bewegte Materialbahn bekannt geworden, die lediglich eine einzige Kammer aufweist, die gleichzeitig als Zuführ- und Verteilkammer dient. Da das für die Belüftung dienende Medium nur an einer Stirnseite dem Düsenkörper zugeführt wird, wird dieser Medienstrom aufgeteilt, wobei ein Teil des Medienstroms in der gemeinsamen Zuführ- und Verteilkammer zunächst zur gegenüberliegenden Stirnseite der Düsenkammer geführt und dort umgelenkt wird, um dann gemeinsam mit dem verbleibenden anderen Anteil des zugeführten gasförmigen Mediums über die im Düsenkasten vorgesehenen Düsenöffnungen in Richtung Materialbahn auszuströmen.

Eine demgegenüber verbesserte Lösung ist beispielsweise aus der EP 0 907 476 B1 bekannt geworden. Die aus dieser Vorveröffentlichung bekannte Belüftungsdüse zeichnet sich unter anderem dadurch aus, dass sie nicht nur eine Zuführkammer zur Versorgung der Belüftungsdüse mit Behandlungsgas aufweist und daneben nicht nur eine Verteil- und Ausströmkammer, über die das Behandlungsgas über vorgesehene Düsenöffnungen in Richtung Materialbahn abströmen kann, sondern dass zusätzlich zwischen der Zuführkammer und der Ausström- und Verteilkammer zumindest noch eine weitere Kammer vorgesehen ist. Dadurch wird eine deutlich höhere Vergleichmäßigung des über die gesamte Breite der zu behandelnden Materialbahn ausströmenden Medienstroms erzielt, was die Temperaturverteilung sowie den Volumenstrom und die Stromstärke über die Düsenanordnung hinweg betrifft. Dies schlägt sich positiv auf die Qualität beispielsweise des herzustellenden und quer zu reckenden Kunststofffilms nieder.

Schließlich soll auch noch auf die EP 0 377 311 A1 verwiesen werden. Gemäß dieser Vorveröffentlichung wird vorgeschlagen zwei über die Breite der Folienbahn von einer stirnseitigen Einblasseite aus zur gegenüberliegenden Seite mit abnehmenden Innenquerschnitt verlaufende Kanäle zu verwenden, die gegensinnig ausgerichtet sind. Beide mit gegensinnig zueinander abnehmenden Querschnitten versehene Kanäle sind auf ihrer Unterseite mit einer Verteilkammer verbunden, worüber dann das gasförmige Medium in Richtung Folie ausströmen kann.

Ausgehend von diesem Stand der Technik ist es Aufgabe der vorliegenden Erfindung eine möglichst gute oder verbesserte Blasdüse zu schaffen, die demgegenüber aber einfacher aufgebaut ist.

Die Erfindung wird entsprechend den im Anspruch 1 angegebenen Merkmalen gelöst. Vorteilhafte Ausgestaltungen der Erfindung sind in den Unteransprüchen angegeben.

Die erfindungsgemäße Lösung basiert dabei auf einer Einkammer-Anordnung. Dabei ist umso überraschender, dass mit einer derartigen Einkammer-Anordnung, die bisher allerdings vom technischen Ergebnis her der Zweikammer-Lösung oder gar der erwähnten Dreikammer-Lösung weit unterlegen war, tatsächlich Ergebnisse erzielbar sind, die mit sehr viel aufwendigeren und teuren und auch schweren Düsenkästen mit einer Zwei- oder einer Dreikammerlösung zumindest vergleichbar sind. Mit anderen Worten ist es im Rahmen der Erfindung möglich geworden, dass mit der erfindungsgemäßen Einkammer-Lösung eine Verteilung des ausströmenden Mediums über die Düsenordnung-Anordnung hinweg erzielbar ist, die sich durch eine hochgradige Vergleichmäßigung der Ausströmvolumen über die gesamte Arbeitsbreite der zu behandelnden Materialbahn hinweg auszeichnet.

Bisher sah man den Vorteil in den erwähnten Zweikammerdüsen beispielsweise in einer dadurch erzielbaren verbesserten Verteilung des Medienstroms über die Arbeitsbreite der Düsenanordnung hinweg, verglichen mit den bisher bekannt gewordenen Einkammerdüsen. Allerdings sind derartige Zweikammerdüsen aufgrund des komplexeren inneren Aufbaus auch deutlich teurer und schwerer. Zudem erfordert eine optimale Festlegung der Überströmöffnungen zwischen der ersten und der zweiten Kammer eine langwierige Vorauslegung bzw. Berechnung. Um die ausreichende Sicherheit hierfür zu gewährleisten bedarf es dabei immer noch der Umsetzung eines Testaufbaus mit den zuvor vorausgelegten bzw. berechneten Düsenöffnungen und Düsenanordnungen, um wirklich die gewünschte Volumen-Verteilung über alle Düsenöffnungen hinweg sicherzustellen. Danach folgt in der Regel noch eine anschließende ergänzende Überarbeitung und Auslegung bzw. Anpassung zur Erzielung einer gewünschten Optimierung.

Ein weiterer großer Nachteil der Zweikammerdüsen ist der signifikant höhere Totaldruckverlust, welcher durch die Innenstruktur und die Überströmöffnungen in dem Düsenkasten verursacht wird und damit die laufenden Energiekosten zur Versorgung (der benötigten Pumpen und/oder der benötigten Ventilatoren) erhöht.

Schließlich muss auch noch angemerkt werden, dass derartige Zweikammerdüsen auch einen Nachteil bezüglich der damit verbundenen Wartung und Innenreinigung aufweisen. Dabei ist durch den Mehrkammer-Aufbau die Innenstruktur der Düsen teilweise derart verbaut, dass die Innenstruktur zur Durchführung einer Wartung oder Innenreinigung nur sehr beschränkt oder überhaupt nicht mehr zugänglich ist.

Umso mehr überrascht es, dass im Rahmen der Erfindung mit vergleichsweise einfachen Mitteln eine derartige Verbesserung auch im Falle der einer Einkammerdüse möglich ist.

Dabei ist es im Rahmen der Erfindung in einer bevorzugten Ausführungsform auch möglich, dass beispielsweise das Lochfeld, in dem die Austrittsdüsen für das gasförmige Medium gebildet sind, eine Lochkonstruktion aufweisen kann, die von einem konstanten Lochdurchmesser ausgeht. Mit anderen Worten sind im Rahmen der Erfindung konstante Auslassöffnungen oder gleichbleibende sich wiederholende Lochmuster über die gesamte Länge des Düsenkastens, also über die sich über die Breite der Materialbahn erstreckende gesamte Arbeitsbreite möglich, und zwar auch für unterschiedlich große und lange Düsenkästen, die für unterschiedlich breite Folienbahnen beispielsweise in Reckanlagen eingesetzt werden können. Dies bietet einen wichtigen Vorteil, da ansonsten bei unterschiedlicher Auslegung der Lochgrößen und/oder Lochmuster und auch unterschiedlicher Auslegung über die Länge des Düsenkastens hinweg für jeden einzelnen Anwendungsfall wieder neue Vorauslegungen und/oder Berechnungen hätten durchgeführt werden müssen, um zu einer optimalen Verteilung des Medienstromes zu gelangen. Mit anderen Worten lässt sich in der erfindungsgemäßen Einkammer-Lösung eine deutliche Verbesserung bezüglich des Medienstromes über die Arbeitsbreite hinweg gewährleisten. Dabei kann sogar die Querschnittsform sehr einfach gehalten sein, nämlich über die gesamte Länge des Düsenkastens letztlich z.B. rechteckig gestaltet sein.

Die erfindungsgemäße Lösung lässt sich dabei vereinfacht gesagt dadurch umsetzen, dass die erfindungsgemäße Blasdüse und damit der erfindungsgemäße Düsenkasten über seine Länge hinweg einen der Einlassöffnung des gasförmigen Fluids näherliegenden konvergenten und ein daran sich anschließenden und/oder nachfolgenden divergenten Bereich umfasst. Der Düsenkasten kann beispielsweise dadurch gebildet sein, dass im konvergenten Bereich die Oberseite des Düsenkastens unter Verringerung des Kastenquerschnittes langsam auf die Unterseite des Düsenkastens zuläuft und ab einer gewissen Übergangstelle oder einem Knickpunkt oder Knickstelle von dort aus wieder konvergent verlaufend, also weg verlaufend ausgebildet ist.

Dabei ist es im Rahmen der Erfindung ausreichend, wenn sowohl in dem konvergenten Düsenkastenbereich oder Düsenkastenabschnitt wie in dem sich daran anschließenden divergenten Düsenkastenbereich oder -abschnitt ggf. nur in einer Teillänge tatsächlich konvergente bzw. divergente Abschnitte ausgebildet sind, ggf. auch mehrfach aufeinanderfolgend.

Zusammenfassend lassen sich die wesentlichsten Vorteile der erfindungsgemäßen Einkammerdüse wie folgt beschreiben:
- es ergibt sich eine massive Reduzierung der Streuung des gasförmigen Medienstroms über die Arbeitsbreite der Blasdüse hinweg, und dies selbst bei großen Arbeitsbreiten;
- verglichen zu vorbekannten Zwei- oder Dreikammerdüsen zeichnet sich die erfindungsgemäße Einkammerdüse durch einen geringen Fertigungsaufwand aus;
- die erfindungsgemäße Einkammerdüse ist deutlich kostengünstiger herstellbar als vergleichbare Lösungen nach dem Stand der Technik und weist dabei vor allem auch ein deutlich geringeres Gewicht auf als herkömmliche Zweikammer- oder Dreikammerdüsen;
- die erfindungsgemäße Einkammerdüse verursacht einen deutlich geringeren Druckverlust als die Zweikammerdüse; und
- der Innenraum der Einkammerdüse ist sehr viel leichter zugänglich, insbesondere auch zur Innenreinigung, verglichen mit den vorbekannten Zweikammer- oder Dreikammerdüsen.

Die Erfindung wird nachfolgend anhand von Zeichnungen näher erläutert. Dabei zeigen im Einzelnen
- Figur 1:: eine schematische Gesamtansicht der erfindungsgemäßen Blasdüse;
- Figur 2:: eine schematische Seitenansicht der erfindungsgemäßen Blasdüse;
- Figur 3a:: eine schematische Querschnittsansicht der in Figur 2 gezeigten Blasdüse längs der Linie IIIa-IIIa;
- Figur 3b:: eine schematische Querschnittsdarstellung längs der Linie IIIb-IIIb;
- Figur 3c:: eine Querschnittsdarstellung durch die in Figur 2 gezeigte Blasdüse längs der Linie IIIc-IIIc;
- Figur 4:: eine weitere schematische Querschnittsdarstellung der erfindungsgemäßen Blasdüse;
- Figur 5a bis 5g:: sieben ausschnittsweise wiedergegebene Beispiele für unterschiedliche Belüftungsdüsen-Geometrien; und
- Figur 6:: ein Diagramm.

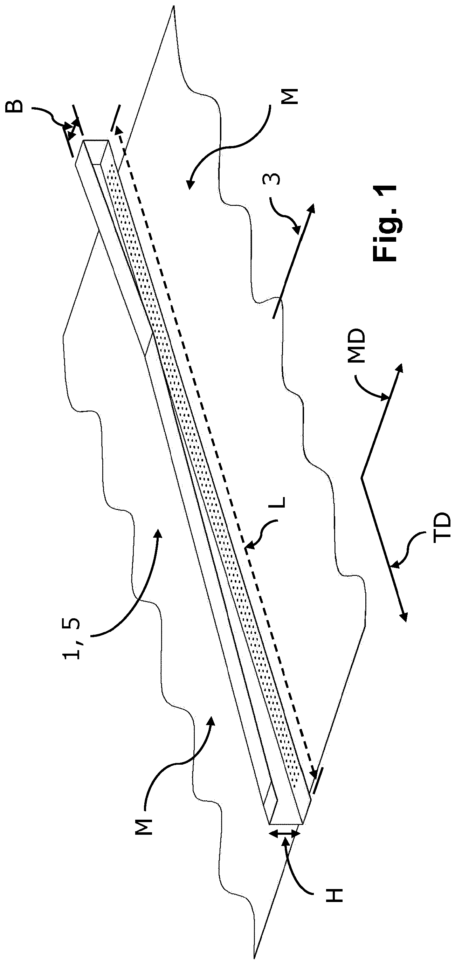

Nachfolgend wird zunächst auf Figur 1 eingegangen, in der die erfindungsgemäße Blasdüse 1 in schematischer dreidimensionaler Darstellung wiedergegeben ist.

Dabei ist aus Figur 1 zu ersehen, dass die erwähnte Blasdüse 1 beispielsweise oberhalb einer bewegten Materialbahn M angeordnet ist, die gemäß Pfeilrichtung 3 in Abzugsrichtung bewegt wird. Bei der Materialbahn M handelt es sich beispielsweise um einen Kunststofffilm, der in einer Reckanlage gereckt wird. Bei der Reckanlage kann es sich um eine Querreckanlage, um eine Längsreckanlage oder beispielsweise eine sequentielle Reckanlage mit einer Längs- und einer Querreckstufe oder sogar um eine Simultanreckanlage handeln.

Die in Figur 1 gezeigte Blasdüse ist dabei üblicherweise nicht nur auf einer Seite der darunter hinwegbewegten Materialbahn M angeordnet, sondern auf beiden Seiten bevorzugt symmetrisch, also oberhalb und unterhalb der Materialbahn M in dem erwähnten vorzugsweise geringen Abstand. Die Blasdüse wird insoweit auch als Düsenkasten 5 bezeichnet, der eine Längserstreckung L eine Breite B und eine - worauf später noch umfassender eingegangen wird - eine Höhe H aufweist, die sich in Längsrichtung L des Düsenkastens 5 zumindest abschnittsweise verändert.

Der erwähnte Düsenkasten 5 ist üblicherweise quer zu der darunter hinweg bewegten Materialbahn M angeordnet, d.h. in der Regel senkrecht dazu. Von daher verläuft also die Längsrichtung L des Düsenkastens 1 in Querrichtung zu der bewegten Materialbahn M, in einer Reckanlage also in Querrichtung der Reckanlage (TDO). Ist der Düsenkasten senkrecht zu der Abzugsrichtung angeordnet, dann verläuft die Breitenerstreckung des Düsenkastens parallel zur Abzugsrichtung 3. Die Höhe ist dann senkrecht zur Ebene E der Materialbahn ausgerichtet. In Figur 1 ist dabei noch schematisch die Maschinenlängsrichtung MD einer Reckanlage und die dazu senkrecht in Breitenrichtung der Materialbahn M verlaufende Maschinenquerrichtung TD eingezeichnet. Mit anderen Worten wird also eine entsprechende Blasdüse 1 bzw. Düsenkasten 5 senkrecht zur Längslaufrichtung der Folie (MD-Richtung) und damit parallel zur Querrichtung oder Querlaufrichtung der Folie (TD-Richtung) verlaufend oberhalb und/oder unterhalb einer zu behandelnden bewegten Materialbahn M angeordnet.

Die Materialbahn M selbst ist in Figur 1 nur ausschnittsweise wiedergegeben.

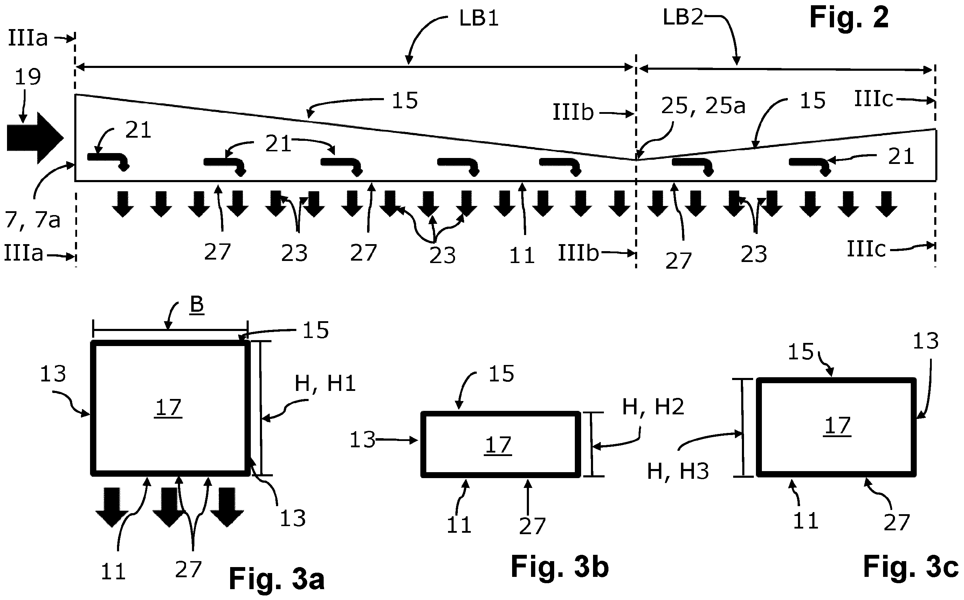

Nachfolgend wird auf Figur 2 und die Figuren 3a bis 3c eingegangen.

In Figur 2 ist in schematischer Seitenansicht die in Figur 1 gezeigte erfindungsgemäße Blasdüse 1 wiedergegeben, allerdings in "gestauchter" Wiedergabe, wodurch die über die Länge L der Blasdüse hinweg bestehende Änderung in der Höhe deutlicher ausfällt.

Die Blasdüse 1 und damit der Düsenkasten 5 wird in der Regel einseitig mit einem Temperaturträgermedium, z.B. Luft mittels einer Pumpe und/oder eines Ventilators versorgt. Dabei wird nachfolgend allgemein auch von einem Medium oder Fluid gesprochen, also letztlich einem gasförmigen Medium oder Fluid, das auf eine entsprechende Temperatur aufgeheizt oder abgekühlt sein kann, je nachdem ob das aus dem Düsenkasten in Richtung Materialbahn M ausströmende Medium zur Erwärmung oder Aufheizung oder zum Kühlen der Materialbahn M herangezogen werden soll.

Von daher weist die Blasdüse 1 oder der Düsenkasten 5 eine Einströmseite 7 auf, die von daher mit einer entsprechenden Einlass- oder Einströmöffnung 7a versehen ist. Diese Einlass- oder Einströmöffnung 7a bzw. die entsprechende Einströmseite 7 des Düsenkastens 5 wird teilweise auch als einströmseitige Stirnseite 7 oder stirnseitige Einlass- oder Einströmöffnung 7a bezeichnet.

Die dazu entfernt liegende oder gegenüberliegende Seite oder Stirnseite des Düsenkastens 5 wird insoweit dann auch als Verschlussseite 9 bezeichnet.

Der Düsenkasten 5 ist oder kann grundsätzlich eine rechteckige Querschnittsform aufweisen. Dabei weist der Düsenkasten 5 eine Unterseite 11 auf, die im montierten Zustand der Blasdüse 1 benachbart zu einer an ihm vorbei bewegten Materialbahn M in Richtung der Materialbahn M ausgerichtet ist und die wie erwähnt in einem bevorzugt geringen Abstand zur Materialbahn M angeordnet ist.

Die Unterseite 11 oder der Düsenkasten 5 insgesamt weist dabei eine Breite B auf, die bevorzugt über die gesamte Länge L des Düsenkastens unverändert bleibt oder bleiben kann (aber nicht gleich bleiben muss), zumindest was die Breite der darin befindlichen Ausströmöffnungen oder den Bereich der darin befindlichen Ausströmöffnungen betrifft.

Wie aus Figur 3a bis 3c grundsätzlich zu ersehen ist, umfasst der Düsenkasten ferner zwei in Breitenrichtung und damit in Abzugsrichtung 3 versetzt liegende Seitenwände 13 auf, die bei senkrechter Ausrichtung zur Unterseite in dem Abstand B angeordnet sein können.

Zur Unterseite 11 beabstandet ist die Oberseite 15 vorgesehen, die zwischen den beiden Seitenwänden 13 gegenüberliegend zur Unterseite 11 verläuft. Dadurch wird der in seiner einfachsten Form bevorzugt im Querschnitt rechteckförmige Düsenkasten 5 gebildet, der somit über seine gesamte Länge L nur eine einzige Kammer 17 aufweist. Es wird insofern auch teilweise von einer "Einkammerdüse" gesprochen.

Bei der schematischen Seitenansicht gemäß Figur 2 ist also zu ersehen, dass beispielsweise das erwähnte Temperaturträgermedium oder allgemein das Fluid oder Medium über die Einströmseite 7 und die dort vorgesehene Einströmöffnung 7a gemäß der Pfeildarstellung 19 einströmt. Entsprechend den weiteren Pfeildarstellungen 21 strömt das gasförmige Temperaturträgermedium im Inneren des Düsenkastens 5 (also in der Kammer 17) teilweise bis zu dessen zur Einströmöffnung gegenüberliegenden Verschlussseite 9 weiter. Auf diesem Weg strömt stets ein Teil-Mediumstrom entsprechend den Pfeildarstellungen 21 durch die in der Unterseite 11 des Düsenkastens 5 vorgesehenen Austrittsöffnungen einer Austrittsöffnungsanordnung oder -einrichtung 27 nach unten hin ab. Die Strömung erfolgt gemäß den Pfeildarstellungen 23 in Figur 2 in Richtung einer dort unmittelbar parallel zur Unterseite 11 des Düsenkastens und damit senkrecht zur Zeichenebene fortbewegten Materialbahn (wie dies grundsätzlich anhand von Figur 1 dargestellt ist).

Wie aus der Querschnittsdarstellung gemäß Figur 2 ferner zu ersehen ist, verläuft die Oberseite 15 des Düsenkastens 5 aber nicht parallel zur Unterseite, so dass die Querschnittsgröße über die Länge L des Düsenkastens unverändert bliebe, sondern weist zumindest zwei Längsbereiche, nämlich einen Längsbereich LB1 und einen Längsbereich LB2 mit einer veränderten Höhe auf.

In dem der Einströmseite 7 näher liegenden Längsbereich LB1 ist von der Einströmseite ausgehend oder der Einströmseite näher liegend ein Bereich ausgebildet, bei welchem die Höhe H des Düsenkastens zumindest abschnittsweise abnimmt. Im gezeigten Ausführungsbeispiel ist dieser einströmseitige Längsbereich LB1 konvergierend ausgebildet, also derart, dass die Höhe H des Düsenkastens 5 abnimmt, und zwar im gezeigten Ausführungsbeispiel über die gesamte Länge des ersten Längsbereiches LB1. Es wird insoweit auch von einem konvergenten Längsbereich LB1 gesprochen.

In Figur 2 ist die Ausbildung derart, dass die Höhe von der Einströmseite 7 bis zu einer Wendestelle oder einem Wendebereich, der nachfolgend auch in Form eines Wendekante 25 ausgebildet sein kann, abnimmt, bevorzugt wie gezeigt kontinuierlich abnimmt. Die eingangsseitige Höhe H1 (die die maximale Höhe des Düsenkastens darstellt) ist dabei größer als die Höhe H2 an der erwähnten Wendestelle oder der Wendekante 25 am Ende des ersten Längsbereiches LB1.

Von dieser Wendestelle 25 ausgehend schließt sich an den ersten Längsbereich LB1 der einströmseitig entfernter liegende Längsbereich LB2 an, der gegenüber dem ersten Längsbereich LB1 divergierend ausgestaltet ist. Mit anderen Worten nimmt hier die Höhe H des Düsenkastens in dem Bereich zwischen der Wendestelle 25 oder dem Wendebereich 25 und der Verschlussseite 9 zu, so dass die Höhe H am Ende des Düsenkastens wieder größer ist als an der Wendestelle oder dem Wendebereich 25. Es wird insoweit auch von einem divergenten Längsbereich LB2 gesprochen.

Dabei ist aus der schematischen Darstellung gemäß Figur 2 auch zu ersehen, dass die Höhe H3 des Düsenkastens 5 an seiner Verschlussseite 9 größer ist als an der Wendestelle oder dem Wendebereich 25 (also am Anfang des divergenten Längsbereiches LB2), allerdings kleiner als die Höhe H1 des Düsenkastens 5 an dessen Einströmseite 7.

Bei einer derartigen Ausgestaltung des Düsenkastens ergeben sich Querschnitte, wie sie anhand der Figuren 3a, 3b und 3c wiedergegeben sind. Die Querschnittsform gemäß Figur 3a entspricht dem Querschnitt an der Einströmöffnung 7, also der Einströmseite 7. Die Querschnittsform 3b ist jene an der Wendestelle oder dem Wendebereich bzw. an der Wendekante 25 (oder allgemein ein Übergangsbereich 25a). Die Querschnittsform 3c entspricht dem Querschnitt des Düsenkastens im Bereich der Verschlussseite 9. Dabei ist wie erwähnt die Höhe H1 an der Einströmseite größer als die Höhe H3 an der Verschlussseite 9 und diese Höhe H3 an der Verschlussseite 9 ist wiederum größer als die Höhe H2 an der Wendestelle, dem Wendebereich oder der Wendekante 25.

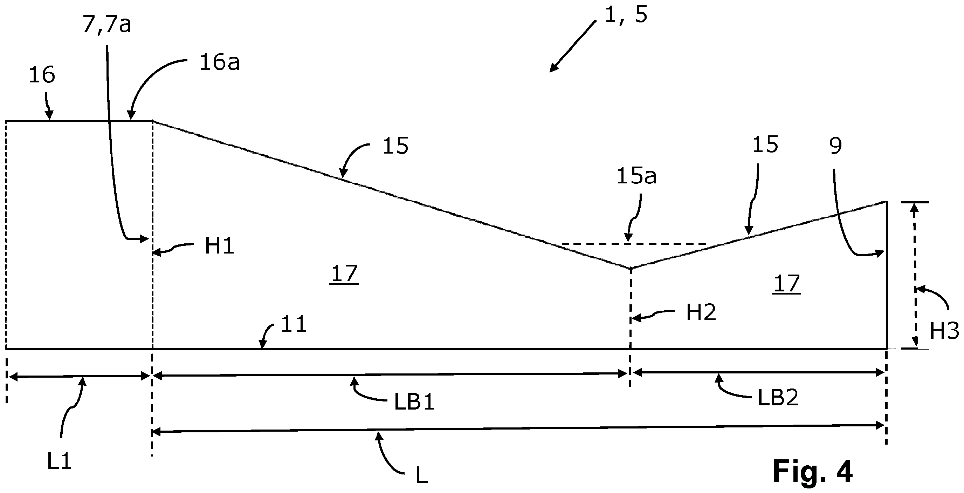

In Figur 4 ist ähnlich zu Figur 2 die Geometrie des erfindungsgemäßen Düsenkastens dargestellt, quasi auch in einer "gestauchten" Wiedergabe, wodurch der Abfall der Oberseite 15 des Düsenkastens in dem konvergenten Längsbereich LB1 wie aber auch der Anstieg der Oberseite 15 des Düsenkastens 5 in dem darauffolgenden zweiten divergierenden Längsbereich LB2 überproportional stark zum Ausdruck kommt. Gute Ergebnisse lassen sich im Rahmen der Erfindung dann erzielen, wenn beispielsweise der einströmseitige konvergierende Längsbereich LB1 sich über zumindest 55 %, d.h. insbesondere zumindest 60 %, 65 %, 70 %, 75 % oder 80 % der Gesamtlänge L des Düsenkastens 5 oder damit der gesamten Breite der zu behandelnden Materialbahn M erstreckt.

Mit anderen Worten sollte deshalb der einströmseitig entfernt liegende zweite und dabei divergente Längsbereich LB2 sich über zumindest 5 %, 10 %, 15 %, 20 %, 30 %, 35 % oder 40 % der Gesamtlänge L des Düsenkastens 5 bzw. der Breite der zu behandelnden Materialbahn M erstrecken.

Ferner wird angemerkt, dass die Höhe H3 an der Verschlussseite 9 am Ende des Düsenkastens 5 bezogen auf die einströmseitige Höhe H1 eine relative Größe aufweist, die bevorzugt kleiner als 90 %, insbesondere kleiner als 95 %, 80 %, 75 %, 70 %, 65 %, 60 %, 55 %, 50 %, 45 % oder kleiner als 40 % der eingangsseitigen Größe H1 ist. Vorzugsweise sollte diese verschlussseitige Höhe H3 aber größer sein als 20 %, insbesondere 25 %, 30 %, 35 %, 40 %, 45 %, 50 %, 55 %, 60 %, 65 % oder größer als 70 % der eingangsseitigen Höhe H1 des Düsenkastens.

Die kleinste Höhe des erfindungsgemäßen Düsenkastens in dem Bereich zwischen dem konvergierenden und dem divergierenden Bereich des Düsenkastens, also die Höhe H2 sollte bevorzugt einen Wert aufweisen, der mindestens 5 %, insbesondere 10 %, 15 %, 20 %, 25 %, 30 %, 35 %, 40 %, 45 %, 50 %, 55 %, 60 %, 65 %, 70 % kleiner ist als die verschlussseitige Höhe H3.

Mit anderen Worten sollte also diese kleinste Höhe H2 einen Wert aufweisen, der bezogen auf die eingangsseitige Höhe H1 eine Größe aufweist, die vorzugsweise kleiner als 75 %, insbesondere kleiner als 70 %, 65 %, 60 %, 55 %, 50 %, 45 %, 40 %, 35 %, 30 %, 25 %, 20 % beträgt.

Angemerkt wird auch, dass beispielsweise in dem ersten so genannten konvergenten Längsbereich LB1 die Oberseite 15 des Düsenkastens 5 abweichend vom gezeigten Ausführungsbeispiel nicht von der Einströmseite 7 bis zur Wendestelle oder dem Wendebereich oder Wendekante 25 kontinuierlich auf die Unterseite 11 weiter zu verlaufen muss. Möglich ist auch, dass diese konvergierende Ausgestaltung ggf. nur für einen Teilabschnitt, also eine Teillänge in diesem ersten Längsbereich LB1 ausgebildet sein kann, mit anderen Worten die Oberseite 15 des Düsenkastens 5 zumindest Abschnitte umfassen kann, in denen diese Oberseite 15 beispielsweise auch parallel oder in einem anderen Neigungswinkel als in dem verbleibenden konvergierenden Abschnitt zur Unterseite verlaufen kann. Mit anderen Worten würde in diesem Falle die keilförmig auf die Unterseite 11 zulaufende Oberseite 15 des Düsenkastens nur in einem Teilbereich, also einer Teillänge des ersten Längsbereichs LB1 diesen Verlauf aufweisen.

Das gleiche gilt auch für den divergierenden Längsbereich LB2. Auch hier muss die Oberseite 15 des Düsenkastens nicht durchgängig von der Wendestelle oder dem Wendebereich oder dem Wendekante 25 bis zur Verschlussseite 9 divergent verlaufen, sondern kann auch hier Abschnitte aufweisen, die beispielsweise in einem anderen Neigungswinkel verlaufen oder sogar parallel zur Unterseite 11 ausgerichtet sind.

Wenn also von einem konvergenten Bereichen LB1 gesprochen wird, soll dadurch zum Ausdruck kommen, dass in diesem Längsbereich ein durchgängiger konvergenter Abschnitt vorgesehen sein kann, wie dies anhand von Figur 2 gezeigt ist. Gleichwohl können aber auch hier mehrere konvergente und aufeinander folgende Abschnitte ausgebildet sein, die beispielsweise durch einen oder mehrere Abschnitte voneinander getrennt sind, der bzw. die eine parallel zur Unterseite 11 verlaufende Oberseite 15 aufweisen, im Extremfall vielleicht sogar zumindest kurze Abschnitte, in denen der überwiegend konvergente Bereich LB1 einen Zwischenabschnitt mit divergierenden Verlauf der Oberseite umfasst.

Der darauffolgende zweite Längsbereich LB2 kann also z.B. nicht nur durch eine kontinuierlich divergent ausgebildete Gestaltung geprägt sein, sondern kann beispielsweise auch zwei oder mehrere für sich divergente Längsbereichsabschnitte aufweisen, zwischen denen beispielsweise ein Abschnitt gebildet ist, der eine parallel zur Unterseite 11 verlaufende Oberseite 15 aufweist. Ebenso kann auch hier zwischen den überwiegend divergenten Abschnitten ein zumindest kurzer im Extremfall divergierender Zwischenabschnitt für die Oberseite 15 des Düsenkastens 5 ausgebildet sein. Mit anderen Worten würde in diesem Falle die keilförmig von der Unterseite 11 weglaufende Oberseite 15 des Düsenkastens nur in einem Teilbereich, also einer Teillänge des zweiten Längsbereichs LB2 diesen Verlauf aufweisen.

Ebenso soll angemerkt werden, dass sowohl in dem konvergenten Längsbereich LB1 wie in dem divergenten Längsbereich LB2 die Neigungsform und/oder der Neigungswinkel der Oberseite gegenüber der Unterseite des Düsenkastens nicht identisch sein muss (also immer in dem gleichen Winkel verläuft wie in der Zeichnung gemäß Figur 2 dargestellt ist). Möglich ist auch, dass dieser Bereich Abschnitte aufweisen kann, in welchen diese Winkelausrichtungen der Oberseite bezogen auf die Ausrichtung der Unterseite gewisse Änderungen erfährt.

Schließlich soll auch noch angemerkt werden, dass die gezeigte Wendestelle bzw. Wendebereich oder Wendekante 25 nicht in Form einer echten Knickstelle oder Kante ausgebildet sein muss, sondern dass diese Wendestelle oder dieser Wendebereich oder diese Wendekante 25 auch als Längsbereich ausgebildet sein kann, der sich zumindest über ein gewisses Maß in Längsrichtung L des Düsenkastens erstreckt. Dabei kann in diesem Bereich die Oberseite 15 beispielsweise parallel zur Unterseite 11 verlaufen. Dieser beispielsweise parallel zur Unterseite 11 verlaufende Übergangsbereich 15a ist in Figur strichliert eingezeichnet. Somit fällt der erste Längsbereich LB1 und der zweite Längsbereich LB2 etwas kürzer aus, da die gesamte Länge des Düsenkastens durch die Summe des ersten und zweiten Längsbereiches LB1 und LB2 zuzüglich der Länge des Übergangsbereiches 15a gebildet ist.

Wie erwähnt ist die Unterseite 11 der Blasdüse 1 und damit des Düsenkastens 5 mit zumindest einer oder mehreren Austrittsöffnungen 27 für das hier ausströmende gasförmige Medium versehen.

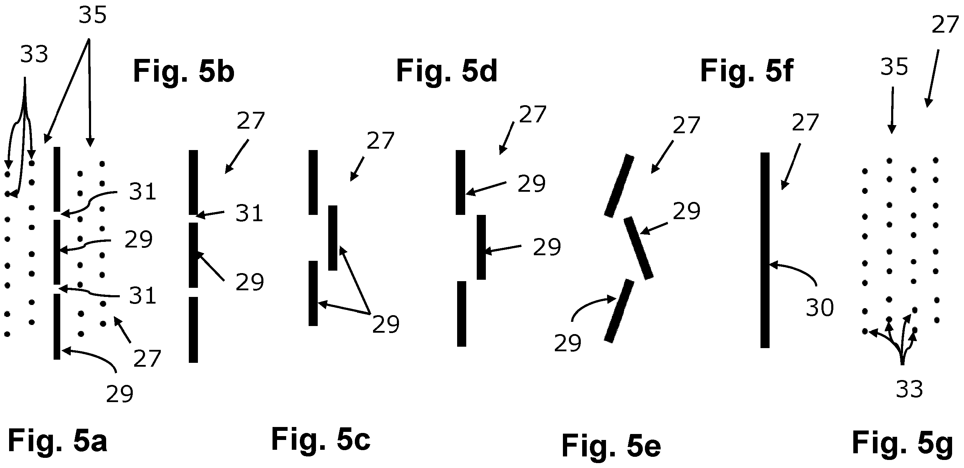

Anhand der Figuren 5a bis 5f sind hier unterschiedliche Möglichkeiten für Ausblasöffnungen 27 gezeigt, die an der Unterseite des Düsenkastens 5 ausgebildet sein können.

Dabei ist in Figur 4 linksliegend vor der eigentlichen Einströmseite 7 des Düsenkastens 5 noch ein Vorkasten 16 dargestellt, der in seiner Gesamtlänge L1 eine nicht abfallende Oberseite aufweist, also eine Oberseite 16a, die parallel zum Boden 11 verläuft. Dessen Seitenwände sind in der Regel in Verlängerung der eigentlichen Seitenwände 13 des eigentlichen Düsenkastens 5 verlaufend vorgesehen, also fluchtend mit diesen Seitenwänden 13. Ein derartiger Vorkasten kann zur ergänzenden Verankerung im Seitenbereich der Reckanlage dienen und/oder zur verbesserten Zuführung eines gasförmigen Fluids, wobei dieser so genannte Vorkasten in seiner Länge L1 seitlich zur eigentlichen Materialbahn vorgesehen ist, und dort in der Regel an der Unter- oder Bodenseite 11 keine Austrittsöffnungen ausgebildet sind. Eine ähnliche Düsenkasten-Verlängerung könnte auch anschließend an die Abschlussseite 9 auf der gegenüberliegenden Seite des Düsenkastens vorgesehen sein. Der vorstehend erwähnte Vorkasten 16 ist jedoch nur optional und nicht zwingend für die Erfindung notwendig.

Dabei sind in den Figuren 5a bis 5g die gezeigten Varianten jeweils bei Unteransicht auf den Düsenkasten wiedergegeben, der sich jeweils entsprechend der Pfeildarstellung in Längsrichtung L erstreckt, wobei von dieser Längserstreckung nur ein vergleichsweise kurzer Ausschnitt der Unteransicht schematisch wiedergebeben ist.

Dabei ist die Ausblasöffnungsanordnung oder -einrichtung 27 in der Regel so gestaltet, dass die Öffnungen in einen Bereich auf der Unterseite 11 angeordnet sind, der etwas schmäler und mittig ist als die Breite der Unterseite 11 selbst.

Bei der Variante gemäß Figur 5a sind z.B. mehrere in Längsrichtung L verlaufende und aufeinander folgende Langlöcher 29 vorgesehen, die durch vergleichsweise demgegenüber kürzere Verbindungsstege 31 in ausgebildeter Unterseite 11 des Düsenkastens 5 voneinander getrennt sind und dabei in einer axialen Längserstreckungsrichtung liegen. Auf beiden Seiten beabstandet sind in mehreren Reihen und dabei ggf. auch leicht versetzt zueinander eine Vielzahl von einzelnen Austrittslöchern 33 ausgebildet, die ein gesamtes Lochfeld 35 ergeben.

Bei der Variante gemäß Figur 5b sind in der Unterseite 11 nur in einer Längserstreckungsrichtung aufeinander folgend liegend Langlöcher 29 ausgebildet, die durch die erwähnten Verbindungsstege 31 in der Unterseite 11 voneinander getrennt sind. Sind keine zusätzlichen Austrittslöcher 33 wie bei der Variante gemäß Figur 5a vorgesehen, sollte die Breite der Langlöcher größer gewählt werden als im Ausführungsbeispiel nach Figur 5a.

Bei der Variante gemäß Figur 5c sind in zwei benachbart zueinander angeordneten Reihen, die in Längsrichtung L verlaufen jeweils beabstandet zueinander ausgebildete Langlöcher 29 vorgesehen. Die Anordnung ist dabei bevorzugt derart, dass sich in Seitenansicht diese Langlöcher überlappen.

Bei der Variante gemäß Figur 5d sind die Langlöcher abweichend zu Figur 5c in nicht überlappender Weise vorgesehen, d.h. in zwei Reihen lediglich so versetzt, dass bei Seitenansicht sich die Langlöcher nicht überlappen. D.h. seitlich von einem Langloch 29 in einer Reihe ist jeweils der verbleibende Abschnitt der Unterseite 11 des Düsenkastens verschlossen, wobei eben ein Langloch 29 in einer Reihe nur dort ausgebildet ist, wo in der benachbarten Langlochreihe kein Langloch 29 vorgesehen ist.

Bei der Gestaltung gemäß Figur 5e ist das Langlochfeld so ausgebildet, dass die in Längsrichtung L des Düsenkastens vorgesehenen Langlöcher 29 jeweils winklig zueinander ausgerichtet sind. Hierzu sind beispielsweise alle aufeinander folgenden geradzahligen Langlöcher mit einem Anstellwinkel nach rechts und alle dazwischen befindlichen Löcher mit einem Anstellwinkel in entgegengesetzter Richtung ausgerichtet.

Anhand von Figur 5f ist dargestellt, dass beispielsweise die Ausblasöffnungsanordung 27 auch durch einen durchgängigen langlochförmigen Schlitz 30 gebildet sein kann. Bei einer solchen Ausgestaltung können links und rechts des Schlitzes noch zusätzliche Lochfelder 35 z.B. mit einer Vielzahl von Einzelöffnungen 33 vorgesehen sein, ähnlich wie in Figur 5a.

Ganz allgemein wird angemerkt, dass die Lochgeometrie für die Ausblasöffnungen eigentlich keine Einschränkungen erfährt und beliebig sein kann, auch aus Kombinationen der nur beispielhaft gezeigten Varianten. Beispielsweise auch neben runden Ausströmöffnungen oder Düsenöffnungen können bei der erläuterten konvergenten-divergenten Einkammerdüse auch weitere geometrische Formen der Öffnung verwendet werden. Wie zum Teil eben beschrieben und gezeigt in Form von einen oder mehreren Schlitzen, Rundlöchern, geformten Öffnungen wie Langlöchern oder ovalen Löchern, mit parallel oder versetzt oder angestellten Langlöchern oder auch in Form von Kombinationen dieser Varianten.

Die Ausblasöffnungsanordnung kann also wie erwähnt Löcher 33 und/oder Schlitze 29 und/oder allgemein Lochfelder 35 umfassen, die über die Länge des Düsenkastens und/oder zumindest über die Breite der Materialbahn hinweg eine entweder gleichbleibende oder sich gleichmäßig wiederholende Geometrie und/oder Formgebung und/oder Größe bzgl. der Düsenaustrittsöffnungen aufweisen. Möglich ist aber auch, dass über die Länge des Düsenkastens hinweg keine gleichbleibende Geometrie vorgesehen ist. So kann beispielsweise die Ausblasöffnungsanordnung Löcher, Schlitze oder andere Durchtrittsöffnungen aufweisen, die sich über die Länge des Düsenkastens oder zumindest in Abschnitten über die Länge des Düsenkastens hinweg in der Form und in dem Durchmesser und/oder Größe ändern. Auch insoweit bestehen keine grundsätzlichen Einschränkungen.

Angemerkt wird ferner, dass die Ausblasdüsenanordnung 27 entsprechend der Länge und/oder Breite des Düsenkastens 5 gewählt werden kann. Idealerweise ist dabei die Ausblasdüsenanordnung 27 zumindest in einer solchen Länge (und damit also quer oder senkrecht zur Abzugsrichtung der Materialbahn) verlaufend im Düsenkasten vorgesehen, die der Breite der Materialbahn entspricht. Dadurch kann ein Medienstrom über die gesamte Breite der Materialbahn erzeugt werden.

Schließlich soll in diesem Zusammenhang auch erwähnt werden, dass die Austrittsöffnungsanordnung 27 oder die Austrittsöffnungen nicht so ausgebildet sein muss bzw. müssen, dass das aus dem Düsenkasten ausströmende Temperaturträgermedium oder Temperaturträgerfluid nur senkrecht zu der beabstandet dazu vorbeigeführten Materialbahn M ausströmen kann, sondern dass die Ausblasöffnungen auch so ausgestaltet sein können, dass das ausströmende Medium beispielsweise in einem Winkel abweichend von 90° auf die Ebene E der Materialbahn M strömen kann (beispielsweise in einem Winkel von 85°, 80°, 75°, 70°, 65°, 60° etc. - beliebige Zwischenwerte zwischen den genannten Werten sind ebenso möglich, also allgemein beispielsweise in einem Bereich zwischen 90° und 60° und jedem beliebigen Teilwert) .

Mit anderen Worten ist also eine Anstellung der jeweiligen Öffnung mit dem Ziel der Neigung des austretenden Freistrahls möglich. Gründe für die Wahl anderer Auslassformen oder Neigungen des Strahls und damit des so genannten Prallwinkels können in der Erhöhung der Freistrahlstabilität sowie der Änderung des Wärmeübergangs in den Materialbahnen sein.

Der Vorteil der erfindungsgemäßen Lösung unter Ausbildung zumindest eines konvergenten der Einströmseite 7 näher liegenden Längsbereiches LB1 und eines dazu nachfolgenden und der Einströmseite 7 entfernter liegenden divergenten Längsbereiches LB2 gibt letztlich die gewünschte annähernd gleiche Strömungsgeschwindigkeit im gesamten Düsenkasten und trägt damit auch zu einem gleichen statischen Innendruck über die gesamte Länge des Düsenkastens bei. Dadurch bleibt die Impulsänderung der Umlenkung und Ausströmung aus dem Düsenkasten 5 über seine Länge L ähnlich. Ein weiterer Vorteil dieser erfindungsgemäßen Lösung ist entsprechend das sich einstellende Wirbelsystem stromabwärts der Wendestelle, des Wendebereichs oder Wendekante, welches unter anderem verhindert, dass sich am Düsenende ein Staupunkt mit einer daraus resultierenden Überversorgung der letzten (also damit zur Einströmseite 7 am entferntesten liegenden) Ausblasöffnungen ausbildet. Die Kombination dieser durch die Geometrie induzierten Effekte ergeben eine deutliche Verbesserung der Verteilung über die Düsenkastenläge von bis zu 70 % verglichen mit einfachen quaderförmigen Einkammerdüsen.

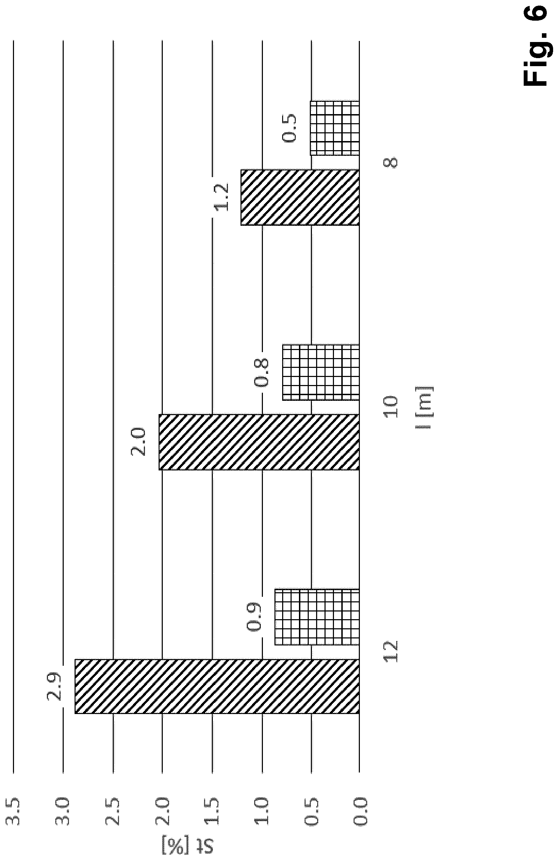

Um die erfindungsgemäßen Vorteile gegenüber einer Standard-Einkammerdüsenkasten-Lösung zu verdeutlichen, die beim Stand der Technik über die gesamte Länge eine gleiche Querschnittsgröße aufweist, wird auf Figur 6 verwiesen. In Figur 6 ist ein Vergleich der Streuung St (Massenströmung je Auslassöffnung) über alle Löcher des Düsenkastens 5 einer rechteckigen Einkammerdüse und der erfindungsgemäßen konvergent-divergenten Einkammerdüse wiedergegeben (bezogen auf die Länge 1 des Düsenkastens in Metern m). Die höheren Diagramm-Balken entsprechen dabei den Verhältnissen im Fall einer rechtwinkeligen Einkammerdüse und die dazu jeweils rechts wiedergegebenen Diagramm-Balken spiegeln die Verhältnisse bei einer erfindungsgemäßen konvergent-divergenten Einkammerdüse wieder, jeweils bezogen auf die unterschiedlichen auf der X-Ache angegebenen Düsenkastenlängen. Selbst bei einer beispielsweise 8 m langen Blasdüse 1 wird bei der einfach gestalteten rechteckigen Einkammerdüse eine maximal gewünschte Streuung des gasförmigen Temperaturträgermediums von ± 1,5 % nahezu erreicht. Bei den größeren Düsenlängen wird sie überschritten und es musste bisher auf die Zweikammerdüse ausgewichen werden.

Die Simulation der konvergent-divergenten Blasdüse 1 zeigt hier eine massive Verringerung der Streuung bezüglich des gasförmigen Fluidstroms über die Arbeitsbreite und kann somit bezüglich dem Streuungskriterium die Zweikammerdüse nach dem Stand der Technik ersetzen.

Ein weiterer Vorteil der konvergent-divergenten Einkammerdüse sind die nur geringfügig höheren Totaldruckverluste verglichen zur einfachen Einkammerdüse nach dem Stand der Technik. In der nachfolgenden Tabelle 1 ist beispielhaft die numerisch berechnete Änderung des Totaldruckverlustes dieser beiden Düsenkästen bei drei verschiedenen Volumenströmen und runden Austrittslöchern wiedergegeben:

**Tabelle 1**

| | **Testfall 1** | **Testfall 0** | **Testfall 2** |
|---|---|---|---|
| ***V̇*/*V̇*₀** | 50% | 100% | 150 % |
| **Δ*pₜₒₜ*/Δ*p*_{0*,tot*}** | 106% | 100% | 105% |

## Patentansprüche

1. Blasdüse, insbesondere für Reckanlagen, mit folgenden Merkmalen
- die Blasdüse (1) umfasst einen Düsenkasten (5),
- der Düsenkasten (5) weist eine Unterseite (11), zwei seitlich zueinander beabstandet verlaufende Seitenwände (13) und eine Oberseite (15) auf, wodurch der Düsenkasten (5) mit einer durch die Unterseite (11), die Seitenwände (13) und die Oberseite (15) umgrenzte Kammer (17) gebildet ist,
- der Düsenkasten (5) weist eine Gesamtlänge (L) auf,
- der Düsenkasten (5) weist an seinem einen Endbereich bezogen auf seine Gesamtlänge (L) eine Einströmseite (7) und auf seiner dazu gegenüberliegenden Seite eine Verschlussseite (9) auf,
- auf der Unterseite (11) ist eine Ausblasöffnungsanordnung (27) vorgesehen, so dass ein über die Einströmseite (7) einströmendes Temperaturträgermedium in den Düsenkasten (5) einströmen und über die Ausblasöffnungsanordnung (27) ausströmen kann,
**gekennzeichnet durch** die folgenden weiteren Merkmale
- der Düsenkasten (5) ist in dessen Längsrichtung (L) in zumindest zwei Bereiche gegliedert, nämlich einen der Einströmseite (7) näher liegenden ersten Längsbereich (LB1) und einen dazu nachfolgenden und/oder nachgeordneten und/oder zur Einströmseite (7) entfernter liegenden zweiten Längsbereich (LB2),
- der erste Längsbereich (LB1) ist konvergent ausgebildet oder umfasst zumindest einen konvergenten Abschnitt, in dem die Höhe (H) zwischen der Unterseite (11) und der Oberseite (15) mit zunehmendem Abstand zur Einströmseite (7) kleiner ist als die Höhe (H1) im Bereich der Einströmseite (7), und
- der zweite Längsbereich (LB2) ist divergent ausgebildet oder umfasst zumindest einen divergenten Abschnitt, in dem die Höhe (H) zwischen der Unterseite (11) und der Oberseite (15) mit zunehmendem Abstand zur Einströmseite (7) größer ist als die Höhe (H) am Ende des ersten Längsbereiches (LB1) und/oder zu Beginn des zweiten Längsbereichs (LB2).

2. Blasdüse nach Anspruch 1, **dadurch gekennzeichnet, dass** zwischen dem ersten oder nachgeordneten Längsbereich (LB1) und dem nachfolgenden zweiten Längsbereich (LB2) eine Wendestelle, ein Wendebereich oder Wendekante (25) ausgebildet ist.

3. Blasdüse nach Anspruch 2, **dadurch gekennzeichnet, dass** die Wendestelle oder der Wendebereich oder die Wendekante (25) in Form einer zwischen den beiden Seitenwänden (13) verlaufenden und in der Oberseite (15) ausgebildeten Kante besteht, an welcher die im ersten Längsbereich (LB1) auf die Unterseite (11) geneigt zulaufende Oberseite (15) in die von der Unterseite (11) winklig weg verlaufenden Oberseite (15) in den zweiten Längsbereich (LB2) übergeht, wobei vorzugsweise zwischen der Ebene der Oberseite (15) in dem ersten Längsbereich (LB1) und der Ebene der Oberseite (15) in dem zweiten Längsbereich (LB2) ein Winkel zueinander gebildet ist, der kleiner als 179° und insbesondere kleiner als 178°, 177°, 176° oder kleiner als 175° ist, und/oder größer ist als 155°, insbesondere größer ist als 156°, 157°, 158°, 159°, 160°, 161°, 162°, 163°, 164°, 165°, 166°, 167°, 168°, 169°, 170°, 171°, 172°, 173°, 174° und insbesondere größer als 175° ist.

4. Blasdüse nach Anspruch 3, **dadurch gekennzeichnet, dass** zwischen dem ersten Längsbereich (LB1) und dem zweiten Längsbereich (LB2) eine weder zum ersten Längsbereich (LB1) noch zum zweiten Längsbereich (LB2) gehörender Übergangsbereich (25a) ausgebildet ist, in welchem die Oberseite (15) des Düsenkastens (5) vorzugsweise parallel zur Unterseite (11) des Düsenkastens (5) verläuft.

5. Blasdüse nach einem der Ansprüche 1 bis 4, **dadurch gekennzeichnet, dass** der erste Längsbereich (LB1) eine Länge aufweist, die größer ist als 55 %, insbesondere größer ist als 60 %, 65 %, 70 %, 75 % oder 80 % der gesamten Länge (L) des Düsenkastens (5) und/oder der Länge der in der Unterseite (11) im Düsenkasten (5) ausgebildeten Ausblasöffnungsanordnung (27) und/oder kleiner ist als 95 %, insbesondere kleiner ist als 90 %, 85 %, 80 %, 75 %, 70 %, 65 % oder 60 % der gesamten Länge (L) des Düsenkastens (5) und/oder der Länge der in der Unterseite (11) im Düsenkasten (5) ausgebildeten Ausblasöffnungsanordnung (27) .

6. Blasdüse nach einem der Ansprüche 1 bis 5, **dadurch gekennzeichnet, dass** der zweite Längsbereich (LB2) eine Länge aufweist, die größer ist als 5 %, insbesondere größer ist als 10 %, 15 %, 20 %, 25 %, 30 %, 35 % oder 40 % der gesamten Länge (L) des Düsenkastens (5) und/oder der Länge der in der Unterseite (11) im Düsenkasten (5) ausgebildeten Ausblasöffnungsanordnung (27) und/oder insbesondere kleiner ist als 90 %, 85 %, 80 %, 75 %, 70 %, 65 % oder kleiner ist als 60 % der gesamten Länge (L) des Düsenkastens (5) und/oder der Länge der in der Unterseite (11) im Düsenkasten (5) ausgebildeten Ausblasöffnungsanordnung (27) .

7. Blasdüse nach einem der Ansprüche 1 bis 6, **dadurch gekennzeichnet, dass** die Höhe (H1) des Düsenkastens (5) im Bereich der Einströmseite (7) größer ist als die Höhe (H3) an der zur Einströmseite (7) gegenüberliegenden Verschlussseite (9) des Düsenkastens (5), und dass die Höhe (H3) an der Verschlussseite (9) größer ist als die Höhe (H2) des Düsenkastens (5) in dessen Umlenkstelle oder Wendebereich oder Wendekante (25) oder Übergangsbereich (25a) .

8. Blasdüse nach einem der Ansprüche 1 bis 7, **dadurch gekennzeichnet, dass** die Höhe (H3) an der Verschlussseite (9) des Düsenkastens (5) eine Größe aufweist, die bevorzugt kleiner als 90 %, insbesondere kleiner als 95 %, 80 %, 75 %, 70 %, 65 %, 60 %, 55 %, 50 %, 45 % oder kleiner als 40 % der eingangsseitigen Größe H1 ist und/oder größer ist als 20 %, insbesondere 25 %, 30 %, 35 %, 40 %, 45 %, 50 %, 55 %, 60 %, 65 % oder größer als 70 % der eingangsseitigen Höhe H1 des Düsenkastens (5).

9. Blasdüse nach einem der Ansprüche 1 bis 8, **dadurch gekennzeichnet, dass** die Höhe (H2) des Düsenkastens (5) an der Wendestelle (25) und/oder in einem zwischen dem ersten und zweiten Längsbereich (LB1, LB2) ausgebildeten Übergangsbereich (15a) um mindestens 5 %, insbesondere 10 %, 15 %, 20 %, 25 %, 30 %, 35 %, 40 %, 45 %, 50 %, 55 %, 60 %, 65 %, 70 % kleiner ist als die Höhe (H3) an der Verschlussseite (9) des Düsenkastens (5) und/oder größer ist als 10 %, vorzugsweise größer ist als 15 %, 20 %,25 %,30 %, 35 %, 40 %, 45 %, 50 %, 55 %, und insbesondere als 60 % größer ist als die Höhe (H3) an der Verschlussseite (9) des Düsenkastens (5).

10. Blasdüse nach einem der Ansprüche 1 bis 9, **dadurch gekennzeichnet, dass** in der Unterseite (11) die Ausblasöffnungsanordnung (27)
- eine durchgängige Schlitzanordnung (29a) und/oder
- mehrere einzelne Langlöcher (29) und/oder
- ein oder mehrere Lochfelder (35) mit einer Vielzahl von Austrittslöchern (33)
umfasst.

11. Reckanlage mit einer Blasdüse nach einem der Ansprüche 1 bis 10, **dadurch gekennzeichnet, dass** die Blasdüse quer oder senkrecht zur Abzugsrichtung (3) einer Materialbahn (M) im Abstand oberhalb und/oder unterhalb der bewegten Materialbahn (M) angeordnet ist, wobei die Länge (L) des Düsenkastens (5) zumindest der Breite der Materialbahn (M) entspricht.

12. Blasdüse nach einem der Ansprüche 1 bis 10, **dadurch gekennzeichnet, dass** die Ausblasöffnungsanordnung Löcher (33), Schlitze (29) und/oder Lochfelder (35) umfasst, die über die Länge des Düsenkastens eine gleichbleibende Geometrie und/oder unterschiedliche Formen und/oder Größe der Düsenaustrittsöffnungen aufweisen.

13. Blasdüse nach einem der Ansprüche 1 bis 10 , **dadurch gekennzeichnet, dass** die Ausblasöffnungsanordnung Löcher (33) und/oder Schlitze (29) und/oder Lochfelder (35) umfasst, die auf der Länge des Düsenkastens zumindest abschnittsweise unterschiedliche Geometrien und/oder unterschiedliche Formen und/oder unterschiedliche Durchmesser oder Größen aufweisen.

## Claims

1. Blowing nozzle, in particular for stretching systems, comprising the following features
- the blowing nozzle (1) has a nozzle box (5),
- the nozzle box (5) has a lower face (11), two lateral walls (13) which extend so as to be laterally spaced apart, and an upper face (15), whereby the nozzle box (5) is formed having a chamber (17) delimited by the lower face (11), the lateral walls (13) and the upper face (15),
- the nozzle box (5) has an overall length (L),
- the nozzle box (5) has an inflow side (7) at one end region thereof, with reference to its overall length (L), and a closure side (9) on the side opposite the inflow side,
- an exhaust opening arrangement (27) is provided on the lower face (11) such that a temperature transfer medium flowing in via the inflow side (7) can flow into the nozzle box (5) and flow out via the exhaust opening arrangement (27),
**characterised by** the following further features
- the nozzle box (5) is divided in its longitudinal direction (L) into at least two regions, specifically a first longitudinal region (LB1) closer to the inflow side (7) and a second longitudinal region (LB2) that follows and/or is downstream of the first longitudinal region and/or further away from the inflow side (7),
- the first longitudinal region (LB1) is convergent or comprises at least one convergent portion in which the height (H) between the lower face (11) and the upper face (15) is smaller than the height (H1) in the region of the inflow side (7) as the distance from the inflow side (7) increases, and
- the second longitudinal region (LB2) is divergent or comprises at least one divergent portion in which the height (H) between the lower face (11) and the upper face (15) is greater than the height (H) at the end of the first longitudinal region (LB1) and/or at the beginning of the second longitudinal region (LB2) as the distance from the inflow side (7) increases.

2. Blowing nozzle according to claim 1, **characterised in that** a turning point, a turning region or turning edge (25) is formed between the first or downstream longitudinal region (LB1) and the following second longitudinal region (LB2).

3. Blowing nozzle according to claim 2, **characterised in that** the turning point or the turning region or the turning edge (25) is in the form of an edge which extends between the two lateral walls (13), is formed in the upper face (15) and on which the upper face (15) which is inclined towards on the lower face (11) in the first longitudinal region (LB1) transitions into the upper face (15) which extends away at an angle from the lower face (11) in the second longitudinal region (LB2), an angle being formed between the plane of the upper face (15) in the first longitudinal region (LB1) and the plane of the upper face (15) in the second longitudinal region (LB2), which angle is smaller than 179° and in particular smaller than 178°, 177°, 176° or smaller than 175°, and/or is greater than 155°, in particular is greater than 156°, 157°, 158°, 159°, 160°, 161°, 162°, 163°, 164°, 165°, 166°, 167°, 168°, 169°, 170°, 171°, 172°, 173° or 174° and in particular greater than 175°.

4. Blowing nozzle according to claim 3, **characterised in that** a transition region (25a) belonging neither to the first longitudinal region (LB1) nor to the second longitudinal region (LB2) is formed between the first longitudinal region (LB1) and the second longitudinal region (LB2), in which transition region the upper face (15) of the nozzle box (5) preferably extends in parallel with the lower face (11) of the nozzle box (5).

5. Blowing nozzle according to any of claims 1 to 4, **characterised in that** the first longitudinal region (LB1) has a length which is greater than 55%, in particular greater than 60%, 65%, 70%, 75% or 80% of the overall length (L) of the nozzle box (5) and/or of the length of the exhaust opening arrangement (27) formed in the lower face (11) in the nozzle box (5) and/or is less than 95%, in particular less than 90%, 85%, 80%, 75%, 70%, 65% or 60% of the overall length (L) of the nozzle box (5) and/or of the length of the exhaust opening arrangement (27) formed in the lower face (11) in the nozzle box (5).

6. Blowing nozzle according to any of claims 1 to 5, **characterised in that** the second longitudinal region (LB2) has a length which is greater than 5%, in particular greater than 10%, 15%, 20%, 25%, 30%, 35% or 40% of the overall length (L) of the nozzle box (5) and/or of the length of the exhaust opening arrangement (27) formed in the lower face (11) in the nozzle box (5) and/or in particular is less than 90%, 85%, 80%, 75%, 70%, 65% or less than 60% of the overall length (L) of the nozzle box (5) and/or of the length of the exhaust opening arrangement (27) formed in the lower face (11) in the nozzle box (5).

7. Blowing nozzle according to any of claims 1 to 6, **characterised in that** the height (H1) of the nozzle box (5) in the region of the inflow side (7) is greater than the height (H3) on the closure side (9) of the nozzle box (5) opposite the inflow side (7), and **in that** the height (H3) on the closure side (9) is greater than the height (H2) of the nozzle box (5) in its deflection point or turning region or turning edge (25) or transition region (25a).

8. Blowing nozzle according to any of claims 1 to 7, **characterised in that** the height (H3) on the closure side (9) of the nozzle box (5) has a size that is preferably less than 90%, in particular less than 95%, 80%, 75%, 70%, 65%, 60%, 55%, 50%, 45% or less than 40% of the input-side size H1 and/or is greater than 20%, in particular 25%, 30%, 35%, 40%, 45%, 50%, 55%, 60%, 65% or greater than 70% of the input-side height H1 of the nozzle box (5).

9. Blowing nozzle according to any of claims 1 to 8, **characterised in that** the height (H2) of the nozzle box (5) at the turning point (25) and/or in a transition region (15a) formed between the first and second longitudinal region (LB1, LB2) is at least 5%, in particular 10%, 15%, 20%, 25%, 30%, 35%, 40%, 45%, 50%, 55%, 60%, 65% or 70% less than the height (H3) on the closure side (9) of the nozzle box (5) and/or is greater than 10%, preferably greater than 15%, 20%, 25%, 30%, 35%, 40%, 45%, 50% or 55%, and in particular 60% greater than the height (H3) on the closure side (9) of the nozzle box (5).

10. Blowing nozzle according to any of claims 1 to 9, **characterised in that** in the lower face (11) the exhaust opening arrangement (27) comprises
- a continuous slot arrangement (29a) and/or
- a plurality of individual elongate holes (29) and/or
- one or more hole fields (35) comprising a large number of exit holes (33).

11. Stretching system comprising a blowing nozzle according to any of claims 1 to 10, **characterised in that** the blowing nozzle is arranged transversely or perpendicularly to the withdrawal direction (3) of a material web (M) at a distance above and/or below the moving material web (M), the length (L) of the nozzle box (5) corresponding at least to the width of the material web (M).

12. Blowing nozzle according to any of claims 1 to 10, **characterised in that** the exhaust opening arrangement comprises holes (33), slots (29) and/or hole fields (35) which have a constant geometry and/or different shapes and/or have the size of the nozzle outlet openings over the length of the nozzle box.

13. Blowing nozzle according to any of claims 1 to 10, **characterised in that** the exhaust opening arrangement comprises holes (33) and/or slots (29) and/or hole fields (35) which have different geometries and/or different shapes and/or different diameters or sizes at least in portions along the length of the nozzle box.

## Revendications

1. Buse de soufflage, notamment destinée à des installations d'étirage de film, présentant les particularités suivantes :
- la buse de soufflage (1) comprend une boîte à buses (5),
- la boîte à buses (5) présente une face inférieure (11), deux parois latérales (13) s'étendant latéralement à distance l'une de l'autre, et une face supérieure (15), moyennant quoi la boîte à buses (5) est constituée avec une chambre (17) délimitée par la face inférieure (11), les parois latérales (13) et la face supérieure (15),
- la boîte à buses (5) présente une longueur totale (L),
- la boîte à buses (5) présente une face d'entrée (7) au niveau d'une zone terminale, eu égard à sa longueur totale (L), et une face de fermeture (9) sur sa face opposée,
- un agencement d'ouvertures de soufflage (27) est prévu sur la face inférieure (11), permettant à un agent de transfert thermique d'entrer dans la boîte à buses (5) par ladite face d'entrée (7) et d'en sortir par l'agencement d'ouvertures de soufflage (27),
**caractérisée par** les autres particularités suivantes :
- la boîte à buses (5) est divisée en au moins deux segments dans son sens longitudinal (L), à savoir un premier segment longitudinal (LB1) proximal à la face d'entrée (7) et un deuxième segment longitudinal (LB2) suivant et/ou disposé en aval dudit premier segment longitudinal et/ou distal à la face d'entrée (7),
- le premier segment longitudinal (LB1) est convergent ou comprend au moins une portion convergente dans laquelle la hauteur (H) entre la face inférieure (11) et la face supérieure (15) va en diminuant avec l'éloignement de la face d'entrée (7), en comparaison de la hauteur (H1) située à proximité de la face d'entrée (7), et
- le deuxième segment longitudinal (LB2) est divergent ou comprend au moins une portion divergente dans laquelle la hauteur (H) entre la face inférieure (11) et la face supérieure (15) va croissant avec l'éloignement de la face d'entrée (7), en comparaison de la hauteur (H) située à l'extrémité du premier segment longitudinal (LB1) et/ou au commencement du deuxième segment longitudinal (LB2).

2. Buse de soufflage selon la revendication 1, **caractérisée en ce qu'**un point d'inflexion, une zone d'inflexion ou arête d'inflexion (25) est conçue entre le premier segment longitudinal ou segment longitudinal aval (LB1) et le deuxième segment longitudinal (LB2) qui le suit.

3. Buse de soufflage selon la revendication 2, **caractérisée en ce que** le point d'inflexion, la zone d'inflexion ou l'arête d'inflexion (25) se trouve sous la forme d'une arête présente entre les deux parois latérales (13) et conçue dans la face supérieure (15) et au niveau de laquelle la face supérieure (15) inclinée en direction de la face inférieure (11) au sein du premier segment longitudinal (LB1) se transforme en une face supérieure (15) inclinée en s'éloignant de la face inférieure (11) au sein du deuxième segment longitudinal (LB2), étant entendu, de préférence, qu'entre le plan de la face supérieure (15) au sein du premier segment longitudinal (LB1) et le plan de la face supérieure (15) au sein du deuxième segment longitudinal (LB2), il est formé un angle de moins de 179° et notamment de moins de 178°, 177°, 176° ou de moins de 175°, et/ou de plus de 155°, notamment de plus de 156°, 157°, 158°, 159°, 160°, 161°, 162°, 163°, 164°, 165°, 166°, 167°, 168°, 169°, 170°, 171°, 172°, 173°, 174° et notamment de plus de 175°.

4. Buse de soufflage selon la revendication 3, **caractérisée en ce qu'**il est conçu, entre le premier segment longitudinal (LB1) et le deuxième segment longitudinal (LB2), une zone de transition (25a) n'appartenant ni au premier segment longitudinal (LB1), ni au deuxième segment longitudinal (LB2), dans laquelle zone la face supérieure (15) de la boîte à buses (5) est de préférence parallèle à la face inférieure (11) de la boîte à buses (5).

5. Buse de soufflage selon l'une des revendications 1 à 4, **caractérisée en ce que** le premier segment longitudinal (LB1) présente une longueur qui est supérieure à 55 %, notamment supérieure à 60 %, 65 %, 70 %, 75 % ou 80 % de la longueur totale (L) de la boîte à buses (5) et/ou de la longueur de l'agencement d'ouvertures de soufflage (27) conçu dans la face inférieure (11) dans la boîte à buses (5) et/ou inférieure à 95 %, notamment inférieure à 90 %, 85 %, 80 %, 75 %, 70 %, 65 % ou 60 % de la longueur totale (L) de la boîte à buses (5) et/ou de la longueur de l'agencement d'ouvertures de soufflage (27) conçu dans la face inférieure (11) dans la boîte à buses (5).

6. Buse de soufflage selon l'une des revendications 1 à 5, **caractérisée en ce que** le deuxième segment longitudinal (LB2) présente une longueur qui est supérieure à 5 %, notamment supérieure à 10 %, 15 %, 20 %, 25 %, 30 %, 35 % ou 40 % de la longueur totale (L) de la boîte à buses (5) et/ou de la longueur de l'agencement d'ouvertures de soufflage (27) conçu dans la face inférieure (11) dans la boîte à buses (5) et/ou notamment inférieure à 90 %, 85 %, 80 %, 75 %, 70 %, 65 % ou inférieure à 60 % de la longueur totale (L) de la boîte à buses (5) et/ou de la longueur de l'agencement d'ouvertures de soufflage (27) conçu dans la face inférieure (11) dans la boîte à buses (5).

7. Buse de soufflage selon l'une des revendications 1 à 6, **caractérisée en ce que** la hauteur (H1) de la boîte à buses (5) existant à proximité de la face d'entrée (7) est supérieure à la hauteur (H3) existant au niveau de la face de fermeture (9) de la boîte à buses (5) qui est opposée à la face d'entrée (7), et **en ce que** la hauteur (H3) existant au niveau de la face de fermeture (9) est supérieure à la hauteur (H2) de la boîte à buses (5) existant à son point de déviation ou au niveau de sa zone d'inflexion ou arête d'inflexion (25) ou au niveau de sa zone de transition (25a).

8. Buse de soufflage selon l'une des revendications 1 à 7, **caractérisée en ce que** la hauteur (H3) existant au niveau de la face de fermeture (9) de la boîte à buses (5) présente une taille de préférence inférieure à 90 %, notamment inférieure à 95 %, 80 %, 75 %, 70 %, 65 %, 60 %, 55 %, 50 %, 45 % ou inférieure à 40 % de la grandeur H1 côté entrée et/ou supérieure à 20 %, notamment 25 %, 30 %, 35 %, 40 %, 45 %, 50 %, 55 %, 60 %, 65 % ou supérieure à 70 % de la hauteur H1 côté entrée de la boîte à buses (5).

9. Buse de soufflage selon l'une des revendications 1 à 8, **caractérisée en ce que** la hauteur (H2) de la boîte à buses (5) au niveau du point d'inflexion (25) et/ou dans une zone de transition (15a) conçue entre le premier et le deuxième segment longitudinal (LB1, LB2) est d'au moins 5 % inférieure, notamment 10 %, 15 %, 20 %, 25 %, 30 %, 35 %, 40 %, 45 %, 50 %, 55 %, 60 %, 65 %, 70 % inférieure à la hauteur (H3) existant au niveau de la face de fermeture (9) de la boîte à buses (5) et/ou supérieure à 10 %, de préférence supérieure à 15 %, 20 %, 25 %, 30 %, 35 %, 40 %, 45 %, 50 %, 55 %, et notamment supérieure à 60 % de la hauteur (H3) existant au niveau de la face de fermeture (9) de la boîte à buses (5).

10. Buse de soufflage selon l'une des revendications 1 à 9, **caractérisée en ce que,** dans la face inférieure (11), l'agencement d'ouvertures de soufflage (27) comprend :
- un ensemble de fentes continues (29a), et/ou
- plusieurs perforations allongées (29) individuelles, et/ou
- une ou plusieurs zones perforées (35) présentant une pluralité de perforations de sortie (33).

11. Installation d'étirage de film dotée d'une buse de soufflage selon l'une des revendications 1 à 10, **caractérisée en ce que** la buse de soufflage est agencée transversalement ou perpendiculairement au sens de sortie (3) d'une bande de matière (M) à une certaine distance au-dessus et/ou au-dessous de la bande de matière (M) en mouvement, la longueur (L) de la boîte à buses (5) correspondant au moins à la largeur de la bande de matière (M).

12. Buse de soufflage selon l'une des revendications 1 à 10, **caractérisée en ce que** l'agencement d'ouvertures de soufflage comprend des perforations (33), rainures (29) et/ou zones perforées (35) qui présentent, sur la longueur de la boîte à buses, une géométrie constante et/ou des formes différentes et/ou une taille différente des ouvertures de sortie de buse.

13. Buse de soufflage selon l'une des revendications 1 à 10, **caractérisée en ce que** l'agencement d'ouvertures de soufflage comprend des perforations (33) et/ou rainures (29) et/ou zones perforées (35) qui présentent, sur la longueur de la boîte à buses, au moins par sections, des géométries différentes et/ou des formes différentes et/ou des tailles ou diamètres différents.
